# EUROPÄISCHE PATENTANMELDUNG

(11) **EP 4 340 185 A1**
(43) Veröffentlichungstag der Anmeldung: **20.03.2024**
(21) Anmeldenummer: 23197214.2
(22) Anmeldetag: 13.09.2023
(51) Int. Cl.: H02K 3/24, H02K 3/30, H02K 3/32, H02K 3/44, H02K 5/10, H02K 5/22, H02K 9/02, H02K 11/33

(54) **ELEKTRISCHE MASCHINE MIT OFFENER SPULENWICKLUNG ZUR DIREKTKÜHLUNG**

(30) Priorität: 16.09.2022 DE 102022209762
(71) Anmelder: Rolls-Royce Deutschland Ltd & Co KG, 15827 Blankenfelde-Mahlow (DE)
(72) Erfinder: SCHULZ, Florian, 15827 Blankenfelde-Mahlow (DE)

(57) **Zusammenfassung**

Eine elektrische Maschine (1A-1C) umfasst: einen Strömungspfad (10) für Kühlfluid (F), ein gegenüber dem Strömungspfad (10) abgedichtetes Gehäuse (11), eine Stromversorgungseinheit (12) und zumindest eine Spule (13A-13C), die zumindest einen isolierten Abschnitt (130) und Kontakte (131) aufweist, wobei die Kontakte (131) der zumindest einen Spule (13A-13C) innerhalb des Gehäuses (11) an Kontakte (120) der Stromversorgungseinheit (12) elektrisch angeschlossen sind und der zumindest eine isolierte Abschnitt (130) im Strömungspfad (10) angeordnet ist.

## Beschreibung

Die vorliegende Offenbarung bezieht sich insbesondere auf eine elektrische Maschine, auf ein Luftfahrzeug und auf ein Verfahren zur Herstellung einer elektrischen Maschine.

Luftfahrzeuge werden in vielfältigen Ausgestaltungen angetrieben. Verbrennungsmaschinen, z.B. Kolbenmotoren oder Gasturbinentriebwerke, ermöglichen große Reichweiten und hohe Geschwindigkeiten. Antriebe mit einem oder mehreren Elektromotor(en) ermöglichen einen Einsatz von nachhaltig erzeugter Energie und sind mitunter besonders wartungsarm und leise.

Besonders im Luftfahrtbereich werden mitunter große Antriebsleistungen benötigt, wobei gleichzeitig möglichst kleine Motoren gewünscht sind. Zugleich wird typischerweise ein geringes Gesamtgewicht angestrebt. Die Entwicklung neuerer Elektromotoren für den Luftfahrtbereich erfolgt immer häufiger auf Basis eines Systems mit 800 V, was weitere Herausforderungen für das Design von Elektromotoren mit sich bringt.

Aufgabe der vorliegenden Erfindung ist es, eine möglichst leistungsfähige elektrische Maschine zu ermöglichen.

Gemäß einem Aspekt wird eine elektrische Maschine, z.B. für ein Fahrzeug, insbesondere für ein Luftfahrzeug, bereitgestellt. Die elektrische Maschine umfasst einen Strömungspfad für Kühlfluid, ein gegenüber dem Strömungspfad abgedichtetes Gehäuse, eine Stromversorgungseinheit und zumindest eine Spule, die zumindest einen isolierten Abschnitt und Kontakte aufweist, wobei die Kontakte der zumindest einen Spule innerhalb des Gehäuses an Kontakte der Stromversorgungseinheit elektrisch angeschlossen sind und der zumindest eine isolierte Abschnitt im Strömungspfad angeordnet ist.

Hierdurch wird eine direkte Kühlung der einen oder mehreren Spulen mit Kühlfluid möglich, wobei durch die Isolierung und den elektrischen Anschluss im gegenüber dem Strömungspfad abgedichteten Gehäuse auch ein elektrisch leitfähiges Kühlfluid oder ein Kühlfluid, welches elektrisch leitende Bestandteile enthält, verwendet werden kann. Damit kann die zumindest eine Spule besonders effektiv gekühlt werden, denn das Kühlfluid kann direkt die zumindest eine Spule kühlen und es wird beispielsweise kein zwischengeschalteter Kühlkörper oder dergleichen benötigt. Weiterhin kann eine externe Strömung des Kühlfluids, z.B. Wind, Fahrtwind oder vergleichbare Phänomene in Wasser genutzt werden, wobei das erhitzte Kühlfluid aus der Maschine herausgeleitet werden kann. Dadurch kann auf eine zusätzliche Rückkühlung, wie sie bei zirkulierenden Kühlungen üblich ist, verzichtet werden. Beispielsweise kann der Kühlstrom zusätzlich durch einen Verdichter verstärkt werden. Durch die besonders effektive Kühlung ist eine besonders hohe Leistungsfähigkeit der elektrischen Maschine möglich.

Die elektrische Maschine kann einen Stator aufweisen. Die zumindest eine Spule kann als Statorspule des Stators ausgebildet sein. Beispielsweise ist die zumindest eine Spule an einer Basis des Stators der elektrischen Maschine befestigt. Dies erlaubt eine besonders leistungsfähige elektrische Maschine.

Optional ist die zumindest eine Spule mittels einer die zumindest eine Spule im Strömungspfad haltenden Halterung an der Basis des Stators befestigt. So kann die zumindest eine Spule besonders gut mit Kühlfluid beaufschlagt werden.

Die elektrische Maschine kann ferner einen drehbar zum Stator gelagerten Rotor umfassen. Der Rotor treibt z.B. einen Propeller an, um Schub zu erzeugen.

Insbesondere kann die elektrische Maschine in Form einer Transversalflussmaschine ausgebildet sein. Dies ermöglicht eine besonders flache Bauweise und große Drehmomente. Die zumindest eine Spule ist z.B. um eine Drehachse des Rotors gewunden. Hierbei ist eine besonders effektive Führung des Kühlfluids um die Spule möglich. Alternativ handelt es sich um eine Radialflussmaschine oder um eine Axialflussmaschine.

Der Strömungspfad steht optional in Fluidverbindung mit einer Außenumgebung. Bei dem Kühlfluid kann es sich um Luft aus der Außenumgebung handeln. Durch die oben beschriebene Ausgestaltung der elektrischen Maschine kann die zumindest eine Spule direkt mit der Außenluft gekühlt werden, auch wenn diese z.B. Regentropfen enthält. Alternativ kann eine Flüssigkühlung vorgesehen sein, insbesondere mit Wasser als Kühlfluid.

Der Strömungspfad kann an der Außenumgebung (z.B. an einem Lufteinlass) beginnen und an der Außenumgebung (z.B. an einem Luftauslass) enden. Auf diese Weise ist eine besonders einfache Versorgung mit und Abfuhr von Kühlfluid möglich.

Der Strömungspfad kann durch die zumindest eine Spule verlaufen. Beispielsweise verläuft der Strömungspfad zwischen und/oder durch Windungen der zumindest einen Spule hindurch. So ist eine besonders gute Kühlung möglich.

Am isolierten Abschnitt ist ein elektrischer Leiter der Spule vollständig durch eine Isolationsschicht umschlossen. Die Isolationsschicht kann für benachbarte Spulenwindungen separat sein. Die Isolationsschicht kann entlang der Länge des Leiters und um den Leiter herum eine gleichbleibende Dicke aufweisen. Im Gegensatz zu einem Verguss der ganzen Spule ist so eine Durchströmung und damit deutlich bessere Wärmeübertragung an das Kühlfluid möglich. Die Isolationsschicht umschließt insbesondere die gesamte Oberfläche der Spule im Strömungspfad.

Die Isolationsschicht am isolierten Abschnitt weist z.B. eine minimale Dicke von 50 µm, insbesondere von 90 µm, insbesondere von 140 µm, insbesondere von 180 µm auf. Dies ermöglicht, je nach Größe der angelegten Spannung, eine sichere Isolation, selbst wenn leitfähige Partikel aus der Außenumgebung in den Strömungspfad gelangen. Beispielsweise wird bei einer Spannung von 800 V eine Dicke von vorzugsweise 180 µm verwendet.

Die Isolationsschicht kann ein fluoriertes Material umfassen oder daraus bestehen. Derartige Materialien erlauben besonders gute dielektrische Eigenschaften und zudem eine besonders gute Widerstandsfähigkeit gegen hohe Temperaturen, Wasser, Chemikalien und Lichtbögen und ermöglichen darüber hinaus auch eine gute mechanische Flexibilität. Bei dem Material der Isolationsschicht handelt es sich z.B. um FEP (Tetrafluorethylen-Hexafluorpropylen-Copolymer), PTFE (Polytetrafluorethylen), ETFE (Ethylen-Tetrafluorethylen-Copolymer) oder PFA (Perfluoralkoxy-Polymer). Alternativ oder zusätzlich kann ein Silikonmaterial verwendet werden.

Die Isolationsschicht kann mit einer äußeren Schicht, insbesondere Beschichtung versehen sein. Allgemein kann vorgesehen sein, dass die elektrisch isolierende Isolationsschicht durch eine elektrisch leitende Schicht umschlossen ist. Das erlaubt gleichbleibende Bedingungen in Bezug auf elektrische Felder, unabhängig von Wasser oder Schmutz auf der Spule. Um einen vergleichbaren Effekt mit der Isolationsschicht allein zu erzielen, müsste eine wesentlich größere Dicke vorgesehen werden.

Konkret kann vorgesehen sein, dass eine elektrisch leitfähige äußere Schicht, mit welcher die Isolationsschicht versehen ist, in Form einer Metallbeschichtung ausgebildet ist. Dies ist gut und präzise herstellbar.

Die Stromversorgungseinheit stellt z.B. eine Spannung von mehreren Hundert Volt, z.B. von 400 V oder mehr, insbesondere von 800 V oder mehr an die Kontakte der zumindest einen Spule bereit. Das erlaubt die Erzeugung eines starken magnetischen Drehfeldes, welches über den Roter einer Propeller antreibt, der es in einen kräftigen Schub umgewandelt.

Die zumindest eine Spule kann mittels einer Dichtung durch eine Wand des Gehäuses zur Spannungsquelle geführt sein. Die Dichtung dichtet zusammen mit der Isolationsschicht das Gehäuse gegenüber dem Kühlfluid ab, insbesondere wasserdicht und/oder luftdicht.

Gemäß einem Aspekt wird ein Luftfahrzeug bereitgestellt, umfassend eine Rotoreinheit mit Rotorschaufeln und die elektrische Maschine nach einer beliebigen, hierin beschriebenen Ausgestaltung zum Antrieb der Rotoreinheit. Die Rotoreinheit und die elektrische Maschine bilden ein Antriebssystem für das Luftfahrzeug. Das Antriebssystem dient zur Erzeugung von Schub und/oder Auftrieb für das Luftfahrzeug.

Gemäß einem Aspekt wird ein Verfahren zur Herstellung einer elektrischen Maschine angegeben, insbesondere der elektrischen Maschine nach einer beliebigen, hierin beschriebenen Ausgestaltung. Das Verfahren umfasst das Bereitstellen zumindest einer Spule, die zumindest einen isolierten Abschnitt und Kontakte aufweist. Das Verfahren umfasst ferner das elektrische Anschließen und Anordnen der Kontakte der zumindest einen Spule derart, dass die Kontakte der zumindest einen Spule innerhalb eines gegenüber einem Strömungspfad für das Kühlfluid abgedichteten Gehäuses an Kontakte der Stromversorgungseinheit elektrisch angeschlossen sind, und das Anordnen des zumindest einen isolierten Abschnitts im Strömungspfad. Hinsichtlich der Vorteile des Verfahrens wird auf die obigen Angaben zur elektrischen Maschine Bezug genommen.

Das Verfahren kann ferner das Berechnen einer Dicke einer Isolationsschicht, durch welche am isolierten Abschnitt ein elektrischer Leiter der Spule insbesondere vollständig zu umschließen ist, umfassen. Dabei kann die zumindest eine Spule mit einer Isolationsschicht mit der berechneten Dicke bereitgestellt werden, insbesondere entsprechend hergestellt und/oder ausgewählt werden. Das ermöglicht eine maßgeschneiderte Dicke, welche die Spule schützt und dabei ein minimales Gewicht aufweist.

Die Dicke der Isolationsschicht kann basierend auf einer durch die Stromversorgungseinheit bereitgestellten Spannung und/oder unter Anwendung des Paschen-Gesetzes berechnet werden. Das ermöglicht eine besonders präzise eingestellte Dicke.

Zum Bereitstellen der zumindest einen Spule kann der elektrische Leiter der Spule mit einem Band aus Isolationsmaterial umwickelt werden, z.B. in mehreren Lagen. Der Leiter mit dem darum gewickelten Band kann sodann, z.B. in einem Ofen, mit Wärme beaufschlagt werden, um die Isolationsschicht zu bilden. Dabei werden übereinander und/oder nebeneinander liegende Lagen des Bandes miteinander verschmolzen. Übereinander und/oder nebeneinander liegende Lagen des Bandes können dabei insbesondere gesintert werden. Es hat sich gezeigt, dass dies eine gegenüber anderen Methoden robustere, da mehrschichtige, Anbringung der Isolationsschicht erlaubt. Alternativ kann durch Extrusion ein Isolationsmaterial auf den Leiter aufgebracht werden, das z.B. eine durchgehende Schicht ausbildet. Eine Fertigung in einem solchen Endlosprozess kann insbesondere bei hohem Materialbedarf kostengünstiger sein. Dabei ist vorzugsweise darauf zu achten, dass das Material keinen sogenannten kalten Fluss aufweist, wie er bei extrudierbaren Fluoropolymeren typischer Weise bekannt ist.

Es werden nun beispielhaft Ausführungsformen mit Bezug auf die Figuren beschrieben; in den Figuren zeigen in schematischen Darstellungen:
- Figur 1: ein Luftfahrzeug in Form eines Flugzeugs mit einer elektrisch angetriebenen Rotoreinheit;
- Figur 2: Komponenten einer elektrischen Maschine des Luftfahrzeugs gemäß Figur 1 in vereinfachter Darstellung;
- Figur 3: die elektrische Maschine des Luftfahrzeugs gemäß Figur 1 in Form einer Transversalflussmaschine in einer Querschnittsansicht;
- Figur 4: eine elektrische Maschine für das Luftfahrzeug gemäß Figur 1 in Form einer Radialflussmaschine;
- Figur 5: eine elektrische Maschine für das Luftfahrzeug gemäß Figur 1 in Form einer Axialflussmaschine;
- Figuren 6A-6C: Querschnittsansichten möglicher Ausgestaltungen elektrischer Leiter samt Isolationsschicht der elektrischen Maschinen gemäß Figuren 2 bis 5;
- Figur 7: Verfahrensschritte zum Versehen eines elektrischen Leiters für die elektrischen Maschinen gemäß Figuren 2 bis 5 mit einer Isolationsschicht; und
- Figur 8: ein Verfahren zur Herstellung einer elektrischen Maschine.

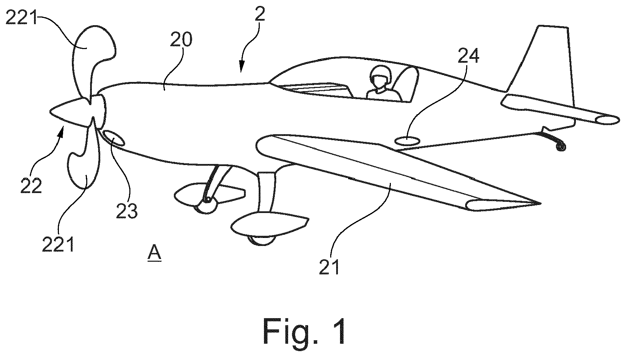

Figur 1 zeigt ein Luftfahrzeug 2 in Form eines elektrisch angetriebenen Flugzeugs mit einem Rumpf 20 und Flügeln 21.

Das Luftfahrzeug 2 umfasst ein Antriebssystem mit einer Rotoreinheit 22, die durch eine elektrische Maschine des Antriebssystems angetrieben wird. Die Rotoreinheit 22 umfasst mehrere, hier exemplarisch zwei Rotorschaufeln 221. Die Rotorschaufeln 221 sind im gezeigten Beispiel an einer Nabe montiert und bilden damit einen Propeller. In alternativen Ausgestaltungen umfasst das Luftfahrzeug 2 z.B. einen Fan anstelle eines Propellers und/oder mehrere Antriebssysteme mit jeweils zumindest einem Propeller, Fan oder dergleichen.

Ferner weist das Luftfahrzeug 2 einen Lufteinlass 23 und (dazu stromab am Luftfahrzeug) einen Luftauslass 24 auf. Der Lufteinlass 23 und der Luftauslass 24 sind jeweils an einer äußeren Oberfläche des Rumpfes 20 ausgebildet, könnten aber auch an anderen Stellen vorgesehen sein. Durch den Lufteinlass 23 kann Luft aus einer Außenumgebung A des Luftfahrzeugs 2 (und der elektrischen Maschine) an die elektrische Maschine und von dort zum Luftauslass 24 strömen. Durch den Luftauslass 24 kann die Luft dann zurück in die Außenumgebung A abströmen

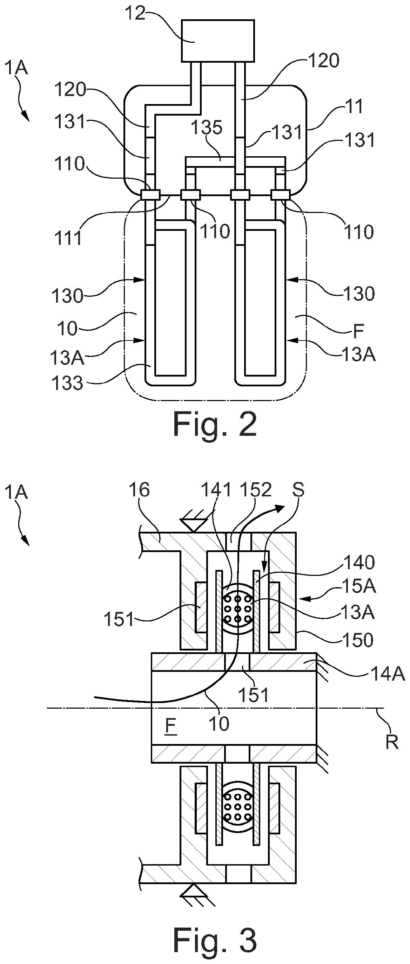

Figur 2 zeigt Teile der elektrischen Maschine 1A des Luftfahrzeugs 2 in Form einer prinzipiellen Darstellung. Die elektrische Maschine 1A umfasst einen Strömungspfad 10 für Kühlfluid F. Der Strömungspfad 10 wird durch eine Wandung berandet, die hier mit einer unterbrochenen Linie veranschaulicht ist. Diese Wandung ist optional, kann aber zur Lenkung des Kühlfluids F beitragen. Der Strömungspfad 10 weist zumindest einen Einlass für das Kühlfluid F auf und zumindest einen Auslass. Vorliegend dient der Lufteinlass 23 des Luftfahrzeugs 2 als Einlass des Strömungspfades, der zumindest eine Auslass befindet sich stromab an einer weiter hinten gelegenen Stelle des Luftfahrzeugs 2. Bei dem Kühlfluid F handelt es sich vorliegend um Luft aus der Außenumgebung A. Alternativ oder zusätzlich kann Wasser oder ein anderes Medium als Kühlfluid durch den Strömungspfad 10 geleitet werden.

Die elektrische Maschine 1A umfasst ferner ein gegenüber dem Strömungspfad 10 luft- und wasserdicht abgedichtetes Gehäuse 11. Das Gehäuse 11 kann, muss aber nicht an den Strömungspfad 10 angrenzen. Das Gehäuse 11 weist einen Innenraum auf, welcher luft- und wasserdicht gegen den Strömungspfad verschlossen ist.

Weiter umfasst die elektrische Maschine 1A eine Stromversorgungseinheit 12. Bei der Stromversorgungseinheit 12 handelt es sich z.B. um einen Wechselrichter, der eine ein- oder mehrphasige, insbesondere dreiphasige Wechselspannung bereitstellt. Die Stromversorgungseinheit 12 wird beispielsweise durch eine Batterie des Luftfahrzeugs 2 mit elektrischem Strom, insbesondere Gleichstrom, versorgt. Die Stromversorgungseinheit 12 kann außerhalb des Gehäuses 11 angeordnet sein. Alternativ dazu ist die Stromversorgungseinheit 12 innerhalb des Gehäuses 11 angeordnet.

Des Weiteren umfasst die elektrische Maschine 1A zumindest eine Spule 13A, hier zwei Spulen 13A, die jeweils zumindest einen isolierten Abschnitt 130 und elektrische Kontakte 131 aufweisen. Der isolierte Abschnitt 130 ist mit einer Isolationsschicht 133 versehen.

Die Kontakte 131 der Spulen 13A sind innerhalb des Gehäuses 11 an Kontakte 120 der Stromversorgungseinheit 12 elektrisch angeschlossen. Im Bereich der Kontakte 120 der Spulen 13A kann ein Leiter der Spulen 13A unisoliert sein. Der zumindest eine isolierte Abschnitt 130 der jeweiligen Spule 13A ist im Strömungspfad 10 angeordnet.

Dabei kann durch den Strömungspfad 10 strömendes Kühlfluid F die Spulen 13A umströmen und/oder durchströmen. Dabei kann vorgesehen sein, dass das Kühlfluid F mehrere, insbesondere jede von einer Vielzahl von Windungen jeder der Spulen 13A überströmen kann und/oder dass das Kühlfluid F zwischen Abschnitten und/oder Windungen der Spulen 13A strömen kann. Durch den direkten Kontakt des Kühlfluids F mit den Spulen 13A ist eine besonders gute Kühlung der Spulen 13A möglich. Anders als gewöhnlich sind die Spulen 13A, insbesondere einzelne Windungen, also nicht in einem Gehäuse oder sie umschließendem Material, z.B. Verguss, vor direkter Beaufschlagung mit Kühlfluid geschützt, sondern sind direkt dem Kühlfluid F ausgesetzt.

Die Kontakte 131 der Spulen 13A bilden die jeweiligen Enden der jeweiligen Spule 13A. Die Kontakte 131 der Spulen 13A sind im Gehäuse 11 angeordnet. Hierzu erstrecken sich die Endabschnitte der Spulen 13Adurch eine Wand 111 des Gehäuses 11 hindurch ins Innere des Gehäuses 11. Die Isolationsschicht 133 umschließt den jeweiligen Leiter der Spulen 13A außerhalb des Gehäuses 11 vollständig und erstreckt sich bis ins Gehäuse 11. Alle nicht im Inneren des Gehäuses 11 angeordneten Oberflächen des Leiters der jeweiligen Spule 13A sind durch die Isolationsschicht 133 (oder anderweitig) überdeckt und/oder eingeschlossen. Dabei sind die Enden der jeweiligen Spule 13A durch Dichtungen 110 an der Wand des Gehäuses 11 geführt. Die Dichtungen 110 stehen jeweils mit der jeweiligen Spule 13A und der (oder einer) Wand 111 des Gehäuses 11 in Berührung. Alternativ können z.B. das Gehäuse 11 selbst und/oder die Isolationsschicht 133 die Dichtungen 110 ausbilden.

Die Dichtungen 110 stellen eine ausreichende wasser- und luftdichte Abdichtung der Spulen 13A gegenüber dem Gehäuse 11 bereit, sodass im Betrieb der elektrischen Maschine 1A kein Kühlfluid F vom Strömungspfad 10 in das Innere des Gehäuses 11 gelangen kann.

Im Inneren des Gehäuses 11 sind die Kontakte 131 unisoliert. Vorliegend stehen zwei Kontakte 131 der Spulen 13A in elektrischem und physischem Kontakt mit den Kontakten 120 der Stromversorgungseinheit 12. Zwei weitere der Kontakte 131 der Spulen 13A stehen miteinander, im gezeigten Beispiel über eine Brücke 135, in elektrischer Verbindung. Die Spulen 13A sind somit vorliegend in Reihe geschaltet, denkbar wäre aber auch eine Parallelschaltung der Spulen 13A, weiterhin eine Stern- oder Dreiecksschaltung bei Verwendung einer dreiphasigen Maschine. Ferner könnten die Spulen 13A durch einen einstückig durchgehenden Leiter gebildet werden. Es sei darauf hingewiesen, dass die Anordnung mit zwei Spulen 13A lediglich beispielhaft ist und auch lediglich eine Spule 13A gemäß Figur 2 vorgesehen sein kann, ebenso wie eine größere Anzahl an parallel und/oder in Reihe geschalteten Spulen 13A.

Die Stromversorgungseinheit 12 stellt im Allgemeinen eine Spannung von mehreren Hundert Volt, insbesondere eine Spannung von mindestens 400 V, im gezeigten Beispiel eine Spannung von 800 V an die Kontakte 131 der Spulen 13A bereit. Bei der Spannung handelt es sich um eine Wechselspannung. Bei den genannten Werten handelt es sich z. B. um den Effektivwert oder den Maximalwert der Wechselspannung.

Im fertig hergestellten Zustand kann das Gehäuse 11 einen unausgefüllten Innenraum aufweisen, das ist aber nicht zwingend der Fall. Alternativ kann der Innenraum des Gehäuses 11 vollständig durch die Kontakte 131, 120 und deren Zuleitungen und optional weitere Komponenten ausgefüllt sein. Beispielsweise wird das Gehäuse 11 durch Verguss der Kontakte 131, 120 hergestellt.

Figur 3 zeigt die elektrische Maschine 1A des Luftfahrzeugs 2 in einer schematischen Schnittdarstellung. Die elektrische Maschine 1A ist in Form eines Elektromotors ausgebildet (der zusätzlich oder alternativ auch als Generator verwendbar sein kann). Konkret ist die elektrische Maschine 1A als Transversalflussmaschine ausgebildet. Die elektrische Maschine 1A umfasst einen Stator 14A, an welchem die Spulen 13A montiert sind (in Figur 3 ist nur eine der Spulen 13A gezeigt), einen Rotor 15A und eine Welle 16. Die zumindest eine Spule 13A ist also als Statorspule ausgebildet. Die Welle 16 überträgt im Betrieb der elektrischen Maschine 1A ein Drehmoment zwischen dem Rotor 15A der elektrischen Maschine 1A und der Rotoreinheit 22 des Luftfahrzeugs 2. Beispielseise ist die Rotoreinheit 22 an der Welle 16 befestigt oder anderweitig damit wirkverbunden. Optional umfasst das Antriebssystem mehrere elektrische Maschinen 1A an der Welle 16.

Der Rotor 15A ist mittels Lager um eine Rotationsachse R relativ zum Stator 14A drehbar gelagert. Der Stator 14A ist fest an einem Träger des Luftfahrzeugs 2 montiert. Beispielsweise ist der Stator 14A relativ zum Rumpf 20 fixiert. Der Stator 14A umfasst eine Basis 140, an welcher die Spule 13A festgelegt ist. Konkret ist die Spule 13A dabei mittels einer Halterung 141 an der Basis 140 befestigt. Die Halterung 141 fasst die Spule 13A ein. Die Halterung 141 hält die Spule 13A durch das Kühlfluid F umströmbar im Strömungspfad 10. Durch die Halterung 141 kann auf einen Verguss der Spule 13A verzichtet werden.

Der Rotor 15A umfasst eine Basis 150, an der mehrere (z.B. oberflächenmontierte) Magnete 151 in Form von Permanentmagneten montiert sind. Die Magnete 151 sind um die Rotationsachse R herum mit paarweise wechselnder Polarität an der Basis 150 des Rotors 15A befestigt. Permanenterregte elektrische Maschinen erlauben besonders hohe Leistungsdichten und Drehmomentdichten. Die Basis 150 ist an der Welle 16 fixiert. Die Magneten 151 sind der Spule 13A des Stators 14A zugewandt.

Vorliegend weist die Basis 150 des Rotors 15A beispielhaft zwei Abschnitte auf, welche spiegelbildlich zueinander ausgebildet sind und zwischen denen der Stator 14A angeordnet ist. Jeder der beiden Abschnitte der Basis 151 trägt vorliegend Magnete 151.

Ein elektrischer Strom durch die Spule 13A erzeugt ein Magnetfeld, welches den Rotor 15A in eine Drehung um die Rotationsachse R versetzt. Zwischen dem Stator 14A und den Abschnitten des Rotors 15A mit den Magneten 151 ist dabei jeweils ein Spalt S ausgebildet, über welchen die magnetischen Kräfte zwischen dem Stator 14A und dem Rotor 15A wirken. Dabei überbrücken magnetische Felder den jeweiligen Spalt S. Vorliegend sind die magnetischen Feldlinien über die Halterung 141 geführt. Jeder der beiden Spalte S ist im Allgemeinen mit einem Gas oder Gasgemisch, hier mit Luft, gefüllt. Jeder der beiden Spalte S weist zumindest abschnittsweise die Form einer Kreisscheibe auf. Somit sind der Rotor 15A und der Stator 14A beiderseits des Stators 14A durch einen (eben geformten) Luftspalt voneinander separiert. Der Stator 14A und der Rotor 15A sind in axialer Richtung, parallel zur Rotationsachse R, voneinander beabstandet. Die Magneten 151 des Rotors 11 sind axial neben dem Stator 14A angeordnet.

Der Strömungspfad 10 verläuft vorliegend durch einen Innenraum des Stators 14A und radial nach außen durch einen Durchlass 142 (in der Basis 140) des Stators 14A. Weiter verläuft der Strömungspfad 10 um (optional durch) die Spule 13A und weiter radial nach außen durch einen Durchlass 152 des Rotors 15A hin zu einem Luftauslass des Strömungspfades 10. Die Spule 13A kann in mehrere Richtungen umströmt werden.

Bei der vorgeschlagenen Lösung ist also vorgesehen, dass äußere Umgebungseinflüsse, wie durch Luft, Schmutz und Wasser, bis an die Spulenwindungen gelassen werden. Bei einem (und durch einen) Flug des Luftfahrzeugs 2 ist die Spule 13A mit Regenwasser beaufschlagbar. Die Isolationsschicht 133 weist eine Dicke im Bereich von einem oder mehreren Hundert Mikrometern (z.B. bei Spannungen unter 1 kV) auf und erlaubt so eine sichere Isolation bei gleichzeitig besonders guten Kühleigenschaften. Da die Spulen 13A nicht in einem schützenden Gehäuse angeordnet sein müssen, kann der Aufbau der elektrischen Maschine 1A zudem vereinfacht werden. Insbesondere kann das Gehäuse des Stators der Maschine teilweise oder vollständig entfallen, wenn die elektrische Kontaktierung im Gehäuse der Spannungsquelle durchgeführt wird.

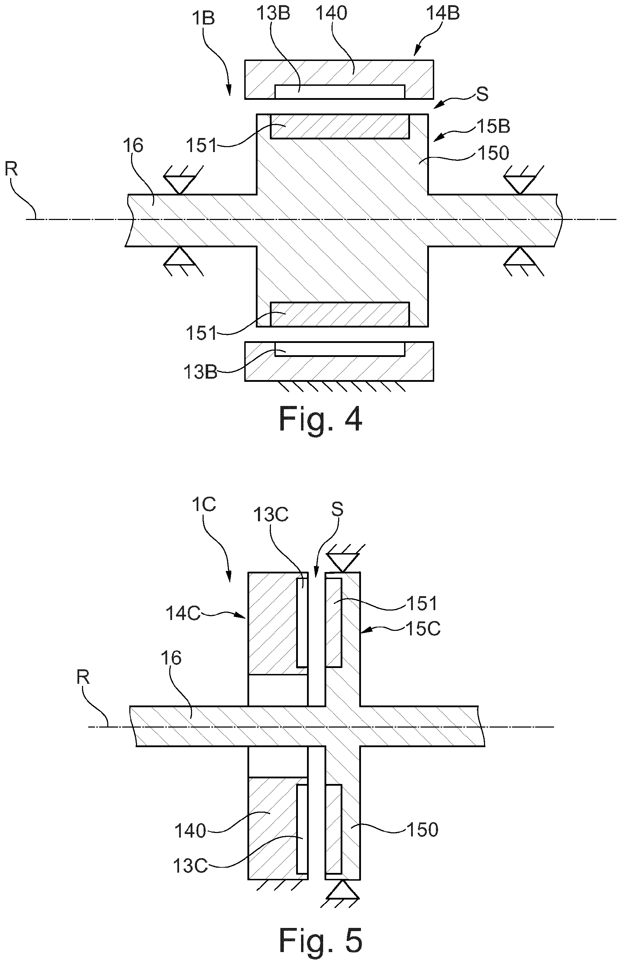

Figur 4 zeigt eine elektrische Maschine 1B, welche das Luftfahrzeug 2 alternativ oder zusätzlich zur elektrischen Maschine 1A umfassen kann. Die elektrische Maschine 1B ist in Form eines Elektromotors ausgebildet (der optional auch als Generator verwendbar ist) und umfasst einen Stator 14B, einen Rotor 15B und eine Welle 16.

Der Rotor 15B ist mittels einer Lagereinrichtung um eine Rotationsachse R relativ zum Stator 14B drehbar gelagert. Die elektrische Maschine 1B ist vorliegend als Innenläufer ausgebildet, wobei auch eine Ausbildung als Außenläufer denkbar wäre. Vorliegend umgibt der Stator 14B den Rotor 15B. Der Rotor 15 B ist zumindest abschnittsweise im Stator 14B aufgenommen. Der Stator 14B ist fest an einem Träger des Luftfahrzeugs 2 montierbar. Beispielsweise ist der Stator 14B relativ zum Rumpf 20 fixierbar oder fixiert.

Der Stator 14B umfasst eine Basis, an welchem mehrere Spulen 13B festgelegt sind. Die Spulen 13B sind gemäß Figur 2 isoliert und in einem in Figur 4 nicht dargestellten Gehäuse angeschlossen. Der Rotor 15B umfasst eine Basis 150, an dem mehrere Magneten 151 in Form von Permanentmagneten festgelegt sind.

Ein elektrischer Strom durch die Spulen 102 erzeugt ein Magnetfeld, welches den Rotor 15B in eine Drehung um die Rotationsachse R versetzt. Zwischen dem Stator 14B und dem Rotor 15B ist dabei ein Spalt S ausgebildet, über welchen die magnetischen Kräfte zwischen dem Stator 14B und dem Rotor 15B wirken. Der Spalt S ist mit einem Gas oder Gasgemisch, hier mit Luft, gefüllt. Der Spalt S weist eine kreiszylindrische Form auf. Somit sind der Rotor 15B und der Stator 14B durch einen hohlzylindrisch geformten Luftspalt voneinander separiert.

Figur 5 zeigt eine elektrische Maschine 1C für das Luftfahrzeug 2, welche das Luftfahrzeug 2 anstelle der elektrischen Maschine 1A gemäß Figur 2 und 3 und/oder der elektrischen Maschine 1B gemäß Figur 4, oder zusätzlich dazu, umfassen kann.

Die elektrische Maschine 1C umfasst einen Stator 14C, einen relativ zum Stator 14C drehbaren Rotor 15C, wobei zwischen dem Stator 14C und dem Rotor 15C ein Spalt S ausgebildet ist, über welchen magnetische Kräfte zwischen dem Stator 14C und dem Rotor 15C wirken. Bei der elektrischen Maschine 1C handelt es sich um eine Axialkraftmaschine und die magnetischen Felder überbrücken den Spalt S in axialer Richtung. Der Spalt S weist die Form einer Kreisscheibe auf.

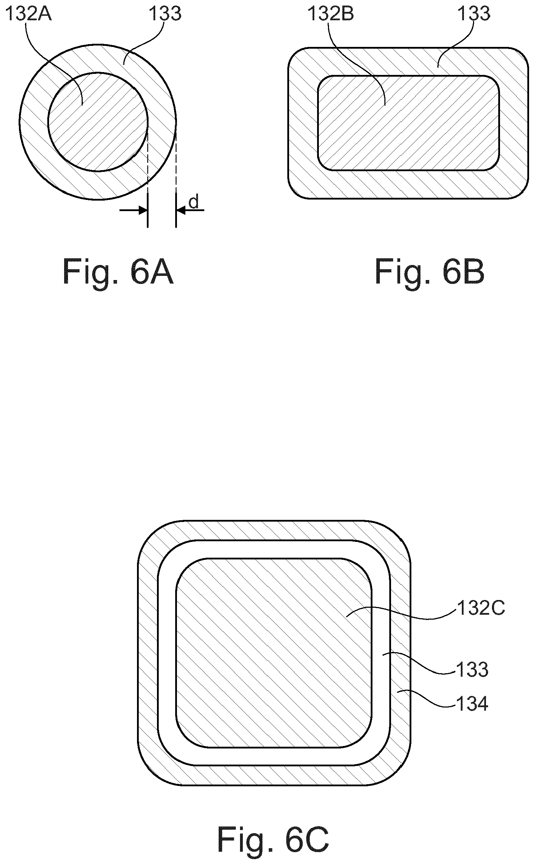

Figur 6A zeigt den Leiter 132A einer der Spulen 13A der elektrischen Maschine 1A gemäß Figuren 2 und 3 im Schnitt. Auch die Spulen 13B, 13C der elektrischen Maschinen 1B, 1C gemäß Figuren 4 und 5 können durch den Leiter 132A ausgebildet sein. Der Leiter 132A weist einen kreisförmigen Querschnitt auf. Bei dem Leiter 132A kann es sich um einen massiven Draht handeln oder um einen Litzenleiter. Der Leiter 132A ist durch die Isolationsschicht 133 umschlossen. Die Isolationsschicht 133 weist entsprechend der durch die Stromversorgungseinheit 12 bereitgestellten Spannung von 800 V eine Dicke d von 180 µm auf. Je nach der Höhe, der durch die Stromversorgungseinheit 12 bereitgestellten Spannung, kann die Dicke z.B. mindestens 50 µm, mindestens 90 µm, mindestens 140 µm, mindestens 180 µm, mindestens 200 µm oder mindestens, etwa oder genau 300 µm betragen. Die Dicke d der Isolationsschicht 133 wird so bemessen, dass sie eine Isolation für die maximale an den Kontakten 131 der Spule 13A anliegende Spannung eine ausreichende elektrische Isolation bereitstellt. Im Vergleich zu konventionellen Spulen, wo die maximale Spannungsdifferenz lediglich zwischen zwei benachbarten Spulenwindungen isoliert wird, führt dies zu einer größeren Dicke der Isolationsschicht 133 (z.B. von 200 Mikrometern bei 1 kV), da die Isolierung an jeder Stelle zum direkt beaufschlagten Kühlmedium sichergestellt wird. Dadurch kann jedoch auch der Strömungspfad 10 ohne Beschädigung mit Wasser gefüllt werden, insbesondere Wasser mit leitfähigen Eigenschaften. Ein weiterer Vorteil liegt darin, dass bei der Spule 13A für die Isolation nicht zwischen Windung-zu-Masse und Windung-zu-Windung unterschieden wird, was den Aufbau ebenfalls vereinfacht. Die Isolationsschicht 133 weist z.B. zumindest eine Dicke auf, die bei der von der Stromversorgungseinheit 12 bereitgestellten Spannung eine Isolation bereitstellt, insbesondere durchschlagfest ist.

Die Isolationsschicht 133 besteht aus einem fluorierten Material. Bei dem Material der Isolationsschicht 133 handelt es sich z.B. um FEP, PTFE, ETFE oder PFA. Alternativ oder zusätzlich umfasst das Material der Isolationsschicht 133 ein Silikonmaterial oder besteht daraus. Silikonmaterialien sind besonders flexibel und weisen keinen Kalt-Fluss auf. PTFE weist eine besonders geringe Wasseraufnahme auf. Es kann vorgesehen sein, dass das Material der Isolationsschicht eine Wasseraufnahme von unter 1 % aufweist.

Figur 6B zeigt einen isolierten Leiter 132B für die elektrischen Maschinen 1A-1C gemäß Figuren 2-5. Insbesondere für die elektrischen Maschinen 1B, 1C gemäß Figuren 4 und 5 kann der Leiter gemäß Figur 6B verwendet werden. Der Leiter 132B ist aufgebaut wie der Leiter 132A gemäß Figur 6A, weist im Unterschied dazu jedoch einen rechteckigen Querschnitt auf.

Figur 6C zeigt einen weiteren isolierten Leiter 132C für die elektrischen Maschinen 1A-1C gemäß Figuren 2-5. Der Leiter 132C ist grundsätzlich aufgebaut wie die Leiter 132A, 132B gemäß Figur 6A und 6B, weist im Unterschied dazu jedoch einen quadratischen Querschnitt auf. Diese Form ist jedoch beispielhaft und der Leiter 132C gemäß Figur 6C könnte auch mit einem runden, rechteckigen oder anders geformten Querschnitt hergestellt werden bzw. sein. Im Unterschied zu den Leitern 132A, 132B gemäß Figuren 6A und 6B ist bei dem Leiter 132C gemäß Figur 6C zusätzlich eine äußere Metallbeschichtung 134 vorgesehen. Die äußere Metallbeschichtung 134 umschließt die Isolationsschicht 133. Die Metallbeschichtung 134 kann durch Kunststoffmetallisierung, z.B. konkret durch Galvanisieren aufgebracht werden. Dies kann z.B. in folgenden Schritten durchgeführt werden:
Optional wird die Oberfläche der Isolationsschicht 133 mittels Beizen mit einer oxidativen Metallsalzlösung aufgeraut. Ferner kann die Oberfläche optional mit Metallkeimen, z. B. Palladium, aktiviert werden. Eine chemische Metallisierung erfolgt zur Bildung einer elektrisch leitenden Schicht. Hierbei wird eine (dünne) Schicht (z.B. 0,3 bis 0,4 µm), beispielsweise aus Kupfer oder Nickel, durch Reduktion aus deren Metallsalzen erzeugt. Daraufhin erfolgt die Abscheidung der eigentlichen Metallschicht in einem oder mehreren Galvanisierbädern. Das Galvanisieren erlaubt eine lückenlose leitende Beschichtung der Oberfläche. Das Aufbringen der Metallbeschichtung 134 kann vor oder nach dem Wickeln der Spule 13A-13C erfolgen. Optional wird eine Beschichtung mit Nanopartikeln aufgebracht.

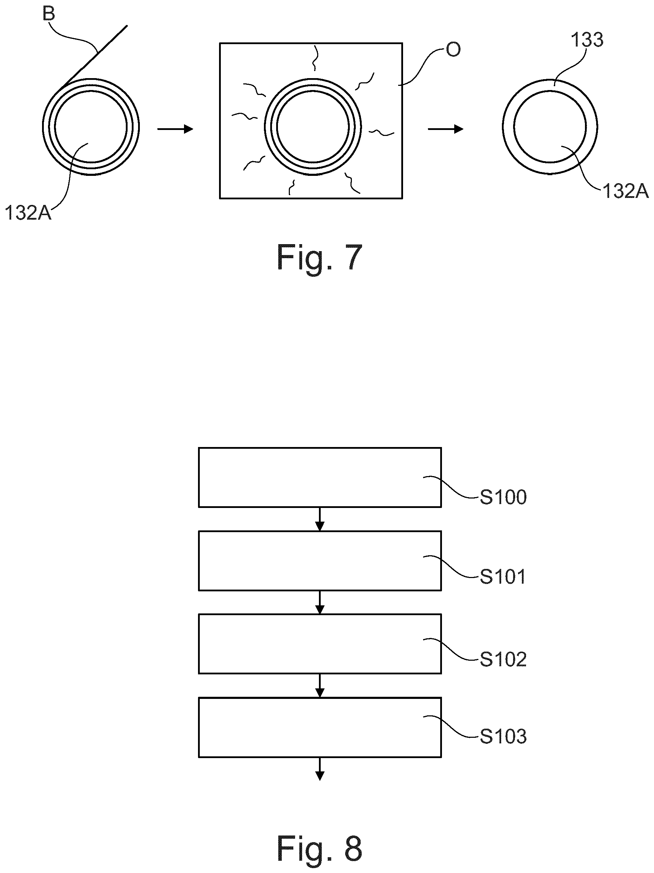

Figur 7 veranschaulicht ferner ein optionales Verfahren zur Herstellung der Isolationsschicht 133 der Spulen 13A-13C. Vorliegend ist die Isolationsschicht 133 der jeweiligen Spulen 13A-13C gemäß Fig. 2 bis 5 in dieser Weise hergestellt. Hierbei wird zunächst der Leiter 132A mit einem Band B aus dem Material der Isolationsschicht 133 umwickelt. Das Band B wird dabei vorzugsweise in mehreren Lagen gewickelt. Das Band B wird so gewickelt, dass es sämtliche Oberflächenbereiche des Leiters 132A, welche später im Strömungspfad 10 angeordnet sind, mit dem Band B überdeckt sind.

Daraufhin wird der mit dem Band B umwickelte Leiter 132A mit Wärme beaufschlagt, vorliegend in einem Ofen O. Hierbei wird das Material des Bandes gesintert und bildet die Isolationsschicht 133. Falls nicht bereits geschehen, dann daraufhin der isolierte Leiter 132A zur Bildung der Spule 13A gebogen werden.

Dieses Wicklungsverfahren weist nicht den Nachteil anderer Methoden, z.B. einer kostengünstigeren Extrusion, des sogenannten kalten Flusses auf, welcher zu irreversiblen Deformationen der Isolationsschicht führen kann und daher die Lebenszeit der entsprechenden Spule verringern kann, wenn über längere Zeit ein (mitunter sehr geringer) mechanischer Druck auf die Isolationsschicht ausgeübt wird. Figur 8 zeigt ein Verfahren zur Herstellung einer elektrischen Maschine 1A-1C, insbesondere einer der elektrischen Maschinen 1A-1C gemäß Figuren 2-5. Das Verfahren umfasst die folgenden Schritte:
Schritt S100: Berechnen einer Dicke d einer Isolationsschicht 133, durch welche ein elektrischer Leiter 132A-132C einer Spule 13A-13C zur Bildung zumindest eines isolierten Abschnitts 130 vollständig zu umschließen ist. Die Dicke d der Isolationsschicht 133 kann basierend auf einer durch die Stromversorgungseinheit 12 bereitgestellten Spannung und/oder unter Anwendung des Paschen-Gesetzes berechnet werden.

Konkret kann hierbei zunächst eine Spannung vorgegeben werden, z.B. 800 V. Es kann eine Bemessungsspannung festgelegt werden, welche optionale Sicherheitsfaktoren einschließt, z.B. 1000 V. Eine Dichtekorrektur, bei Luft als Kühlfluid eine Luftdichtekorrektur, kann vorgenommen werden, was z.B. zu 1250 V führt. Dann kann z.B. mittels einer Simulation und/oder mit Berechnung des Paschen-Gesetzes eine minimale Dicke ermittelt werden. Der so erhaltene Wert (oder ein anders ermittelter Wert für eine minimale Dicke der Isolationsschicht), z.B. 90 Mikrometer, kann mit der relativen Permittivität des Isolationsmaterials multipliziert werden (z.B. 2), woraus z.B. 180 Mikrometer folgen. In diesem Beispiel beträgt die Isolationsdicke von Windung zu Windung dann durchgehend 360 Mikrometer, wohingegen Entwürfe nach gängiger Machart, die zwischen Windung-Windung- und Windung-Masse-Isolierung unterschieden, typischerweise bereits mit einem Zehntel der Spannung und folglich Isolationsdicke auskommen.

Schritt S101: Bereitstellen zumindest einer Spule 13A-13C, die den zumindest einen isolierten Abschnitt 130 und Kontakte 131 aufweist. Dabei wird die zumindest eine Spule 13A-13C mit einer Isolationsschicht 133 mit der berechneten Dicke d bereitgestellt.

Schritt S102: Elektrisches Anschließen und Anordnen der Kontakte 131 der zumindest einen Spule 13A-13C derart, dass die Kontakte 131 der zumindest einen Spule 13A-13C innerhalb eines gegenüber einem Strömungspfad 10 für Kühlfluid F abgedichteten Gehäuses 11 an Kontakte 120 der Stromversorgungseinheit 12 elektrisch angeschlossen sind. Das Gehäuse 11 kann vorgefertigt sein oder, z.B. durch Verguss (z.B. durch ein dielektrisches Material), an den Kontakten 131, 120 hergestellt werden.

Schritt S103 (der vor, nach oder gleichzeitig mit Schritt S102 durchgeführt werden kann): Anordnen des zumindest einen isolierten Abschnitts 130 im Strömungspfad 10. Optional werden Teile des zumindest einen isolierten Abschnitts 130 durch eine Halterung fixiert, wobei die Halterung auch durch Verguss hergestellt werden kann.

Durch die Isolationsschicht 133 kann auch eine direkte Wasserkühlung vorgesehen werden. Dann wird als Kühlfluid F anstatt Luft Wasser durch den Strömungspfad 10 geleitet.

### Bezugszeichenliste

- 1A-1C: elektrische Maschine
- 10: Strömungspfad
- 11: Gehäuse
- 110: Dichtung
- 111: Wand
- 12: Stromversorgungseinheit
- 120: Kontakt
- 13A-13C: Spule
- 130: isolierter Abschnitt
- 131: Kontakt
- 132A-132C: Leiter
- 133: Isolationsschicht
- 134: Metallbeschichtung
- 135: Brücke
- 14A-14C: Stator
- 140: Basis
- 141: Halterung
- 142: Durchlass
- 15A-15C: Rotor
- 150: Basis
- 151: Magnet
- 152: Durchlass
- 16: Welle
- 2: Luftfahrzeug
- 20: Rumpf
- 21: Flügel
- 22: Rotoreinheit
- 221: Rotorschaufel
- 23: Lufteinlass
- 24: Luftauslass
- A: Außenumgebung
- B: Band
- d: Dicke
- F: Kühlfluid
- O: Ofen
- R: Rotationsachse
- S: Spalt

## Patentansprüche

1. Elektrische Maschine (1A-1C), umfassend:
- einen Strömungspfad (10) für Kühlfluid (F),
- ein gegenüber dem Strömungspfad (10) abgedichtetes Gehäuse (11),
- eine Stromversorgungseinheit (12) und
- zumindest eine Spule (13A-13C), die zumindest einen isolierten Abschnitt (130) und Kontakte (131) aufweist,
wobei die Kontakte (131) der zumindest einen Spule (13A-13C) innerhalb des Gehäuses (11) an Kontakte (120) der Stromversorgungseinheit (12) elektrisch angeschlossen sind und der zumindest eine isolierte Abschnitt (130) im Strömungspfad (10) angeordnet ist.

2. Elektrische Maschine (1A-1C) nach Anspruch 1, wobei die zumindest eine Spule (13A-13C) als Statorspule ausgebildet ist und an einer Basis (140) eines Stators (14A-14C) der elektrischen Maschine (1A-1C) befestigt ist.

3. Elektrische Maschine (1A-1C) nach Anspruch 2, wobei die zumindest eine Spule (13A-13C) mittels einer die zumindest eine Spule (13A-13C) im Strömungspfad haltenden Halterung (141) an der Basis (140) des Stators (14A-14C) befestigt ist.

4. Elektrische Maschine (1A-1C) nach einem der vorhergehenden Ansprüche, ausgebildet in Form einer Transversalflussmaschine.

5. Elektrische Maschine (1A-1C) nach einem der vorhergehenden Ansprüche, wobei der Strömungspfad (10) in Fluidverbindung mit einer Außenumgebung (A) steht und wobei das Kühlfluid (F) Luft aus der Außenumgebung (A) ist.

6. Elektrische Maschine (1A-1C) nach Anspruch 5, wobei der Strömungspfad (10) an der Außenumgebung (A) beginnt und an der Außenumgebung (A) endet.

7. Elektrische Maschine (1A-1C) nach einem der vorhergehenden Ansprüche, wobei der Strömungspfad (10) durch Windungen der zumindest einen Spule (13A-13C) verläuft.

8. Elektrische Maschine (1A-1C) nach einem der vorhergehenden Ansprüche, wobei am isolierten Abschnitt (130) ein elektrischer Leiter (132A-132C) der Spule (13A-13C) vollständig durch eine Isolationsschicht (133) umschlossen ist.

9. Elektrische Maschine (1A-1C) nach Anspruch 8, wobei die Isolationsschicht (133) ein fluoriertes Material umfasst oder daraus besteht, insbesondere ein Silikonmaterial.

10. Elektrische Maschine (1A-1C) nach Anspruch 8 oder 9, wobei die Isolationsschicht (133) mit einer elektrisch leitfähigen äußeren Schicht versehen ist.

11. Elektrische Maschine (1A-1C) nach Anspruch 10, wobei die elektrisch leitfähige äußere Schicht in Form einer Metallbeschichtung (134) ausgebildet ist.

12. Luftfahrzeug (2) mit einer Rotorschaufeln (221) umfassenden Rotoreinheit (22) und der elektrischen Maschine (1A-1C) nach einem der vorhergehenden Ansprüche zum Antrieb der Rotoreinheit (22).

13. Verfahren zur Herstellung einer elektrischen Maschine (1A-1C), insbesondere nach einem der Ansprüche 1 bis 11, umfassend:
- Bereitstellen (S101) zumindest einer Spule (13A-13C), die zumindest einen isolierten Abschnitt (130) und Kontakte (131) aufweist, und
- elektrisches Anschließen und Anordnen (S102) der Kontakte (131) der zumindest einen Spule (13A-13C) derart, dass die Kontakte (131) der zumindest einen Spule (13A-13C) innerhalb eines gegenüber einem Strömungspfad (10) für Kühlfluid (F) abgedichteten Gehäuses (11) an Kontakte (120) der Stromversorgungseinheit (12) elektrisch angeschlossen sind, und Anordnen (S103) des zumindest einen isolierten Abschnitts (130) im Strömungspfad (10).

14. Verfahren nach Anspruch 13, ferner umfassend:
- Berechnen (S100) einer Dicke (d) einer Isolationsschicht (133), durch welche am isolierten Abschnitt (130) ein elektrischer Leiter (132A-132C) der Spule (13A-13C) vollständig zu umschließen ist,
wobei die zumindest eine Spule (13A-13C) mit einer Isolationsschicht (133) mit der berechneten Dicke (d) bereitgestellt wird.

15. Verfahren nach Anspruch 14, wobei zum Bereitstellen der zumindest einen Spule (13A-13C) der elektrische Leiter (132A-132C) der Spule (13A-13C) mit einem Band (B) aus Isolationsmaterial umwickelt wird, welches sodann mit Wärme beaufschlagt wird, um die Isolationsschicht (133) zu bilden.
